# EUROPEAN PATENT APPLICATION

(11) **EP 2 095 701 A2**
(43) Date of publication of application: **02.09.2009**
(21) Application number: 09153676.3
(22) Date of filing: 25.02.2009
(51) Int. Cl.: A01C 3/02, E04H 7/06, E04B 7/02

(54) **Cover for a slurry tank or similar facility**

(30) Priority: 28.02.2008 DK 200800310; 06.02.2009 DK 200900220
(71) Applicant: Pan-Top ApS, 4180 Sorø (DK)
(72) Inventor: Hovmand, Hans Christian, 4180, Sorø (DK)
(74) Representative: Orsnes, Henrik Egede

(57) **Abstract**

There is provided a self-sustaining cover for a slurry tank or similar facility. The cover is composed of trapezoidal-shaped panels (4A) inter-connected by I-profiles (4B) that form a cone-shaped design. The cover is mounted on the upper edge of the tank and fixated on the tank sides. The cover can be made gastight and is insulated facilitating possible utilization of biogas.

## Description

### Field of the invention

The present invention relates to a cone-shaped, self-sustaining panel cover for manure/slurry tanks and other similar tanks.

### Background of the invention

To cover slurry tanks several possibilities exist.

Some floating layers which do not reject rainwater have a short life and increase the delivery volume, while no substantial reduction in degassing is achieved since no gastight cover is established

Large concrete slabs, which are commonly used to cover such tanks, are heavy, expensive and difficult to install, and requires several pillars in the tank.

Fabric covers which are supported in the middle of a vertical bar and fastened with straps on the outer shell of the tank have also been used in the prior art.

Fabric covers have a shorter life because the fabric is exposed to degradation due to weather, sunlight and hydrogen sulfide gas from manure.

Another prior art cover is a shell construction, which comprises a number of panels bolted together into a dome-shaped roof construction. Two shells are molded for each panel and the process of manufacture and installation is labour intensive, slow and expensive. Openings for stirring are difficult to mount.

Still another prior art product is a tank cover from the German company EPA GmbH, which cover is joined together by a number of panels of single-layer glass-reinforced polyester. The panels have overlapping flanges bolted together. Meanwhile the bolts of acid resistant, stainless steel corroded away after a few years and the flanges were not gastight. The dished form of the panels further complicated insertion of the required access hatches.

Another well-known product is composed of curved panels of fiberglass polyester, which are joined by gluing. The panels consist of a single layer material with an appropriate thickness. The shell panels are joined together by glue. The shell panels are shaped as dome-segments, and when mounted constitute a dome-shaped cover. The cover is fitted with hatches, however, such hatches are difficult to adapt because of the dished shape of the panels, and moreover they are relatively expensive to produce.

### Summary of the invention

The present invention overcomes the aforementioned shortcomings and drawbacks of the known types of covers for slurry tanks.

The present invention aims to provide a cover, which appears as a smooth, cone-shaped structure composed of trapezoidal-shaped sandwich panels whose outer and inner surfaces are coated with fiberglass polyester between which there is casted polyurethane. Such panels are inter-connected with aluminium I-profiles by gluing or by molding the panels with polyurethane, whereby the connections are stiffened and made gastight.

The construction is self-sustaining as a result of the design of the panels and the special techniques used by placing one or more steel wires in channels through the panels and/or in the bottom and top, and through tightening of the wire to gain stiffness and strength in the construction.

The surfaces of the sandwich panels are of fiberglass polyester, which is resistant to manure-chemicals, prone to be made in various colour tones, and the structure can be modulated in accordance with the surrounding buildings.

The cover only rests on the edge of the tank. In order to distribute the pressure against the tank an expanded list of bitumen impregnated polyether is placed between the cover and the upper part of the tank. This list may also provide the required ventilation through openings made in the list. However, the cover is made gastight where this is desirable by extending the expanded list along the entire upper tank.

The cover is fastened on the tank panels with known eye bolt systems.

At the lower end of the sandwich panels a gutter may be installed along the entire circumference, so that rain or melt water may be diverted away.

Where needed hatches for use in the slurry mixing and pumping may be established. Hatches are built from the factory in the number of sandwich panels that are needed.

The upper ends of the sandwich panels meet in a circle-shaped opening. Above this opening a ventilation cover may be installed or alternatively it is made gas-tight, when required.

The panels are assembled on the ground close to the tank so that a crane can lift the assembled cover in place on the tank. It requires no scaffolding. The cover is fastened onto the tank with casted eye bolts in the concrete panels and stag bolts through the panels into the eye bolts.

### Brief description of the drawings

The invention is explained with reference to the following drawings, where:
Fig. (1) shows the cover seen from above.
Fig. (2) shows a cross section through the centre of the cover.
Fig. (3) shows the construction of each sandwich panel.
Fig. (4) shows the panels joined by aluminium profiles.
Fig. (5) shows the locations of the wire in the panel.
Fig. (6) shows an embodiment employing several wires.

### Detailed description of the invention

A more detailed description of the drawings is as follows:
Fig. (1) shows the cover comprising a number of wedge-shaped panels (1 A), which upon assembly forms a cone having an upper circular opening (1 B).
Fig. (2) shows a cross section through the centre of the cover. The length of the panels is tailored to the tank diameter and the angle (2A) desired on the sides of the cover relative to the horizontal.
Fig. (3) shows that each sandwich panel has an upper side(3A)and a lower side (3B)made from fiberglass as well as a bottom piece (3C) and a top piece (3D) and side panels(3E), which serve as seal and distance bricks etc. In the cavity (3F) polyurethane is casted so that the cavity is completely filled with foamed/expanded polyurethane. Polyurethane is highly adhesive to the surrounding materials rendering the structure very stable.
Fig. (4) shows the array of panels (4 A), which is achieved by the use of special aluminium I-profiles (4B), so that panels from each side are pressed into the I-profile, which is fixed by gluing or casted by polyurethane. As an alternative solution the I-profile can be casted in one of the sides of the panel.
Fig. (5) shows the wire (5A) located in the bottom part of the panel (5B) in a profile that keeps the wire in place. Alternatively, the wire may be kept in place in the panel with an eye bolt (5C).
Fig. (6) shows how channels (6A) may be established through the panels. In these channels steel wires (6B) may be pulled so as to stabilise the cover construction.

The embodiment shown in the drawings and herein described is not to be interpreted as limiting the invention. Other materials, designs and constructive solutions for the individual components are within the scope of the invention. The present description is aimed at slurry tanks, but the invention is applicable to all similar areas where the structure is suitable.

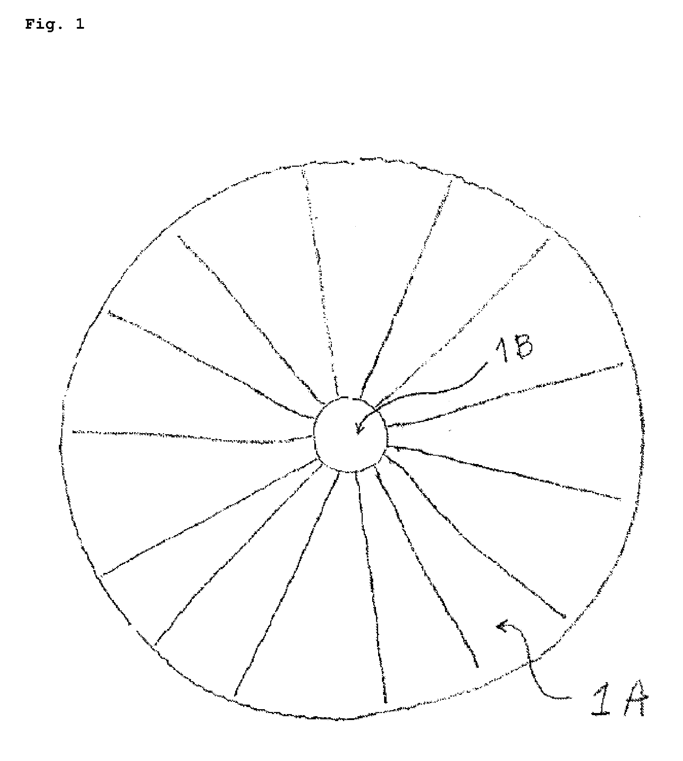

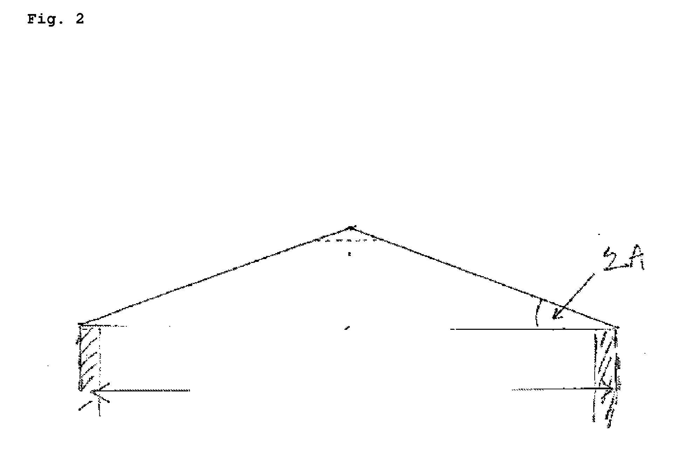

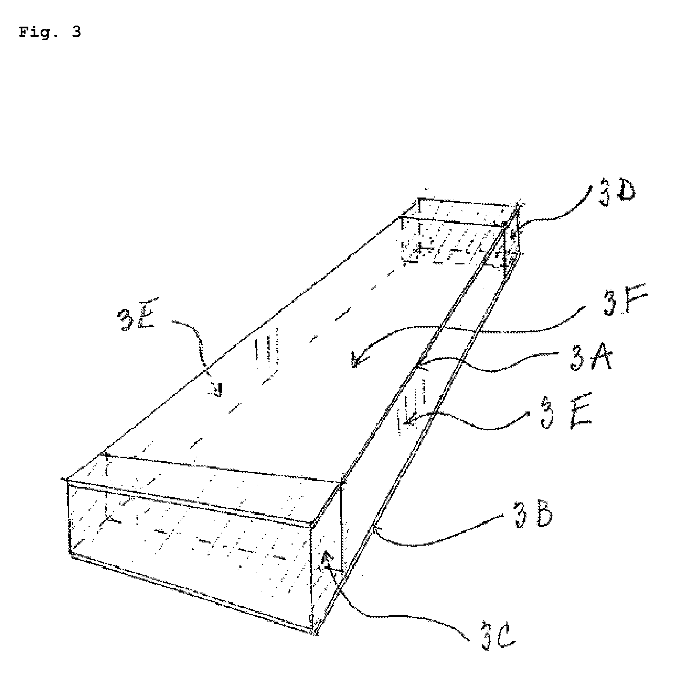

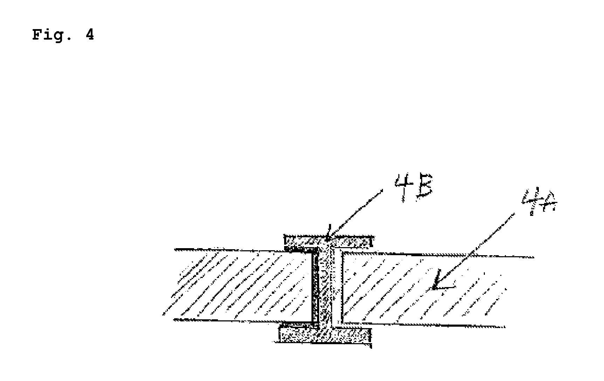

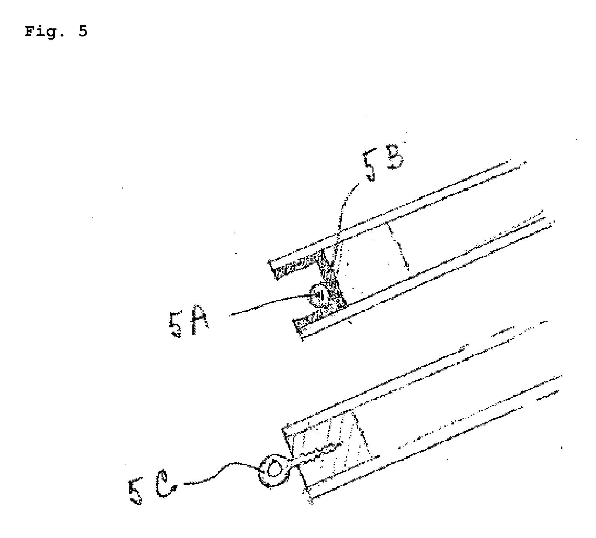

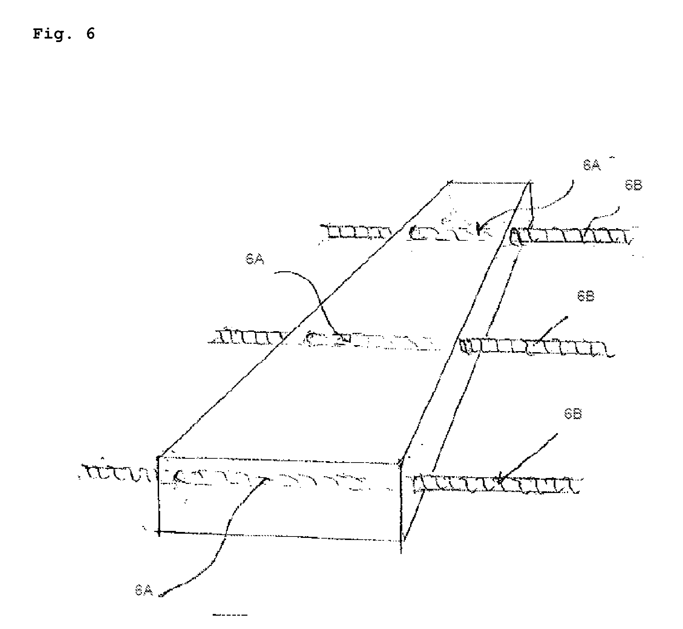

## Claims

1. Cover for a slurry tank or similar facility, wherein the cover is a cone-shaped, self-supporting structure (1), comprising a number of trapezoidal-shaped panels (2) that are assembled in longitudinal sections (3) and fastened together by one or more wires, which hold the panels (4) in place, said trapezoidal-shaped panels being inter-connected longitudinally with I-profiled connection means.

2. Cover according to claim 1, wherein the one or more wires (6B) hold the panels in place through channels (6A) in the panels or at the bottom of the panels (5A, 5B, 5C).

3. Cover according to claim 1 or 2, wherein the panels are sandwich panels having an upper side (3A) and a lower side (3B) made from fiberglass wherein between polyurethane is casted.

4. Cover according to anyone of the preceding claims, wherein the panels are inter-connected with aluminium I-profiles by gluing.

5. Trapezoidal-shaped panel for constructing a cover for a slurry tank or similar facility, said panel being a sandwich panel comprising an upper side (3A) and a lower side (3B) made from fiberglass with polyurethane casted therein between.
